# EUROPEAN PATENT SPECIFICATION

(11) **EP 0 748 666 B1**
(45) Date of publication and mention of the grant of the patent: **20.10.1999**
(21) Application number: 95913322.4
(22) Date of filing: 23.03.1995
(51) Int. Cl.: B23K 35/26

(54) **HIGH-STRENGTH SOLDER ALLOY**
HOCHFESTE LÖTLEGIERUNG
ALLIAGE DE SOUDAGE A HAUTE RESISTANCE

(30) Priority: 13.06.1994 JP 15424494
(43) Date of publication of application: 18.12.1996
(73) Proprietor: Nihon Almit Co.,Ltd., Tokyo 164 (JP)
(72) Inventor: KAWAGUCHI, Toranosuke Nihon Almit Co., Ltd.,, Nakano-ku Tokyo 164 (JP); HAYASHI, Takayuki Nihon Almit Co., Ltd.,, Nakano-ku Tokyo 164 (JP)
(74) Representative: Westman, P. Börje I.
(86) International application number: JP9500531
(87) International publication number: WO9534401

(56) References cited:
- GB-A- 918 807
- JP-A- 55 024 720
- JP-A- 63 123 594
- JP-B- 45 021 580
- US-A- 2 937 438
- US-A- 3 839 023
- CHEMICAL ABSTRACTS, vol. 120, no. 6, 7 February 1994 Columbus, Ohio, US; abstract no. 60442, ANDRUSHCHENKO, EVGENIJ S. ET AL: "Lead-tin type solder for aluminum alloys without fluxing" XP002077036 & SU 1 785 858 A (ROSTOV CONSTRUCTION-ENGINEERING INSTITUTE, USSR) 7 January 1993

## Description

### Technical Field

The present invention relates to a high strength solder alloy the mechanical strength of which is high.

### Background Technology

We, the applicants, proposed a high strength solder alloy the mechanical strength of which was high in our Japanese patent application No. 67552/1993 recently.

As for the constituents of the high strength solder alloy proposed in the above Japanese patent application No.67552/1993, the total weight percentage of Ag and Ge is 0.8 to 7.0 wt.% (each of Ag and Ge is bigger than 0 wt.%), which results in the remarkable enhancement of the mechanical strength of the solder alloy.

Then, the purpose of the present invention is to propose a high strength solder alloy the mechanical strength of which is higher and the wetness property of which is more excellent.

### Disclosure of the Invention

The high strength solder alloy according to the present invention consists of:
Si of 0.0005 to 0.35 wt.%
Ag of 0 to 5.0 wt.%
Sb of 0 to 10.0 wt.%
Bi of 0 to 10.0 wt.%
Pb of 0 to 70 wt.%
Ca of 0 to 0.5 wt.%,
balance Sn of 20 to 95 wt.%.

We, inventors, succeeded in improving the mechanical property of the solder alloy by adding Ge as disclosed in the above Japanese patent application No. 67552/1993 related to "high strength solder alloy". But it has been clarified that as the soldering tool the rod of which, made of Cu, is plated with Fe is used during the soldering work by using the soldering tool at present, Ge added in the solder alloy and Fe with which the soldering tool surface is plated react resulting in the easy formation of the unremovable compound layer on the soldering tool surface. In order to solve the problem, therefore, we searched the additive material necessary for enhancing the mechanical strength of the solder alloy and as a result, we have found that the addition of Si is effective.

It may be novel to add high melting point metal such as Si (1,414 °C) to Sn-Pb solder alloy (eutectic melting point : 183 °C). But it has been clarified through many investigations that the addition of very small amount of Si to the solder alloy gives a big influence on the solder alloy characteristics.

The addition of Si of 0.0005 to 0.35 wt.% brings the following effects.
(1) the strength of the soldered joint which consists of solder alloy including Si is at least two times higher than that of the conventional one.
(2) Si causes the enhancement of the wetness property of the solder alloy particularly which is very important for the soldering. In case the solder alloy includes further very small amount of Pb, the effect of the enhancement of the wetness property becomes further remarkable.
(3) When soldering work is carried out by using a conventional soldering tool with a rod made of copper plated with Fe and solder alloy including Si according to the present invention, no chemical compound layer is formed on the surface of the soldering rod although the soldering work continues for a long time.
(4) Because of the effect of strong reducibility of Si the solder alloy includes, no blow hole exists at the soldered joint, which results in enhancing the reliability of the soldered joint.

Thus the addition of Si gives an epochal effect to the solder alloy resulting from the reducibility of Si. It is thought that as reducible elements which can give a reduction effect to solder alloy Al, Mn, Si, P, etc. are used normally, but it has been clarified that Al and Mn can not give such an effect to it and causes the formation of unremovable oxide layer at the surface of the soldered part and that they can not be used practically as a reducible element.

P is already in practical use as an additive element to solder alloy, but its reducible effect is less than that of Si.

While the melting point of solder alloy is 183 °C, that of Si is 1,414°C. Accordingly, in order to add Si to Sn-Pb solder alloy, Ca-Si alloy, such as CaSi₂ compound the melting point of which is 1,012 °C lower than that of Si, is preferably used. In this method, Ca remains in solder alloy together with Si, and cooperates to enhance the strength of solder alloy, which is remarkable particularly in case the solder alloy includes Pb.

It is known that Ca is added to Pb base alloy (Bahn metal) which is known as a plane bearing alloy for the purpose of the enhancement of its strength.

According to the present invention, for the purpose of the addition of Si to the solder alloy Ag-Si eutectic alloy (Si 4.5 wt.%, Ag 95.5 wt.% ; eutectic temperature 830 °C) may be also used as the mother alloy. In this method, when the additive ratio of Si is 0.001 %, Ag of 0.21 % is included by the solder alloy and contributes to fine crystallization of it.

In the method for adding Si as described above, it is necessary to raise the melting point to a large extent for making the alloy. Therefore in case the solder alloy which includes lager amount of Sn the boiling point of which is relatively high, its addition effect is larger.

The high strength solder alloy according to the present invention based on this investigation is mainly characterized in that it comprises Si of 0.0005 to 0.35 wt.%, and next characterized in that as the other elements Ag of 0 to 5.0 wt.%, Sb of 0 to 10.0 wt.%, Bi of 0 to 10.0 wt.%, Sn of 20 to 95 wt.%, Pb of 0 to 70 wt.% and Ca of 0 to 0.5 wt.%.

The effects of the present invention abstracted from the above description are as follows :
(1) The strength of the soldered joint comprising the solder alloy with Si in it is at least about 2 times higher than that comprising the conventional solder alloy.
(2) Si enhances the wetness property of the solder alloy which is very important for the soldering. The presence of very small amount of Pb makes this effect remarkable.
(3) When soldering work is carried out by using a conventional soldering tool comprising Cu soldering rod plated with Fe, no compound layer is produced on the surface of the soldering rod, which makes it possible to be used in a clean state for a long time.
(4) As Si to be added has in itself a strong reducibility property, when soldering work is carried out by using the solder alloy including Si, the production of the blow hole which is otherwise apt to produce at the soldered joint can be prevented completely. Even if Si content is then very small amount such as 0.0005 wt.%, its addition effect can be recognized definitely.
(5) As from environmental viewpoint Pb-free solder alloy is required at present, the new solder alloy including Si according to the present invention contributes to the development of Sn-low Pb solder alloy.

### Best Condition for Working the Invention

We explain the present invention below referring to its some embodiments.

In an embodiment, CaSi₂ alloy which includes Si was added to soldering alloy comprising Pb of 10 wt.% and Sn of 90 wt.% so that Si content might be 0.003 wt.%.

We made a solder line including fat by using solder alloy including Si and performed a tension test (JIS Z -3197-1986) by using it. We put the test piece on a test plate, heated it at a temperature which is 40 to 50 °C higher than the liquid phase line temperature of it, put it in its melting state for about 30 seconds and then spread it on the test plate. We measured the area of the spread solder alloy after the test with a planimeter.

According to this test result, while the spread area for Sn-Pb alloy without any other elements (Sn 90 wt.%, Pb 10 wt.%) is 1.8 cm², that for the solder alloy including for this embodiment is 2.2 cm² which is about 20 % higher than the former resulting in the improvement of the spreading property.

Next, by using the above two kinds of alloys, we made two alloy lines of 1 mm in diameter for test and performed tension tests for them. According to the test result, while the tensile strength of Sn-Pb alloy (Sn 90 wt.%, Pb 10 wt.%) is 5.3 kgf/mm², that of the solder alloy for the present invention is 7.8 kgf/mm² which is about 43 % higher than the former.

Next, we check another embodiment related to the improvement of the mechanical strength of the soldered joint including Si. We added Si and Ag to the solder alloy comprising Sn of 63 wt. and Pb of 37 wt.% so that Si and Ag might become 0.008 wt.% and 1.68 wt.% respectively.

This is the case in which Si is added to the solder alloy in the presence of Ag-Si eutectic alloy (melting point : 830 °C). We also made a test piece of conventional Sn-Pb solder alloy (Sn 60 wt.%, Pb 40 wt.%) under the same condition for comparison. We made an alloy line of 1 mm in diameter for each alloy.

According to the tension test result for these alloys, while the tensile strength of the conventional solder alloy without Si is 4.2 kgf/mm², that of the solder alloy including Si for the present invention is 6.8 kgf/mm² which is about 62 % higher than the former.

## Claims

1. High strength solder alloy consisting of :
Si of 0.0005 to 0.35 wt.%,
Ag of 0 to 5.0 wt.%,
Sb of 0 to 10.0 wt.%,
Bi of 0 to 10.0 wt.%,
Pb of 0 to 70 wt.%,
Ca of 0 to 0.5 wt.%,
balance Sn of 20 to 95 wt.%.

## Patentansprüche

1. Hochfeste Lötlegierung, dadurch gekennzeichnet, daß sie aus:
0,0005 bis 0,35 Gew.% Si,
0 bis 5,0 Gew.% Ag,
0 bis 10,0 Gew.% Sb,
0 bis 10,0 Gew.% Bi,
0 bis 70 Gew.% Pb,
0 bis 0,5 Gew.% Ca,
20 bis 95 Gew.% Restzinn
besteht.

## Revendications

1. Alliage de soudage à haute résistance comprenant les constituants suivants avec les pourcentages pondéraux suivants:
Si de 0,0005 à 0,35
Ag de 0 à 5,0
Sb de 0 à 10,0
Bi de 0 à 10,0
Pb de 0 à 70
Ca de 0 à 0,5
restant Sn de 20 à 95
